# EUROPEAN PATENT APPLICATION

(11) **EP 4 035 820 A1**
(43) Date of publication of application: **03.08.2022**
(21) Application number: 21154027.3
(22) Date of filing: 28.01.2021
(51) Int. Cl.: B23K 26/06, B23K 26/066, B23K 26/082, B23K 26/70, B23K 26/064

(54) **LASER PROCESSING HEAD HAVING A DIAPHRAGM TO INCREASE SCAN FIELD OF THE LASER BEAM**

(71) Applicant: Precitec GmbH & Co. KG, 76571 Gaggenau-Bad Rotenfels (DE)
(72) Inventor: Moser, Rüdiger, 76316 Malsch (DE); Walde, Tom, 77652 Offenburg (DE)
(74) Representative: Ter Meer Steinmeister & Partner

(57) **Abstract**

A laser processing head (1) is presented. The laser processing head (1) includes a laser entry module (40) for introducing a laser beam (9); a collimating module (44) for collimating the laser beam (9); a scanning module (46) for deflecting the laser beam (9); a focusing module (50) for focusing the laser beam (9); and at least one diaphragm (100) for increasing a scan field (S) of the laser beam (9). The diaphragm (100) comprises a diaphragm body (104) and an opening (102), and is configured to limit a cross-sectional area (9c) of the laser beam (9) by the diaphragm body (104). The at least one diaphragm (100) is positioned optically downstream of the laser entry module (40) and optically upstream of the focusing module (50). A laser processing system (2) including the laser processing head (1) is also presented. Furthermore, a method for increasing a scan field (S) of the laser beam (9) is also provided.

## Description

The present invention generally relates to laser processing heads, and particularly to techniques in a laser processing head for increasing a scan field of the laser beam.

In recent years, laser processing devices i.e. devices that use laser beams have been increasingly deployed in different industries e.g. various fabrication devices using laser beams are pervasively used in the manufacturing industry. Such laser processing devices use a laser beam which is generated by a laser source and directed towards a target or workpiece for carrying out various techniques such as cutting, machining, engraving, etc. While being transmitted from the laser source to the workpiece or target, the laser beam is generally required to be optically altered by using different optical elements such as being focused onto the workpiece by using focusing lens.

Such laser processing devices generally have a component referred to as a head, also referred hereinafter to as laser processing head, e.g. a laser cutting head or a laser welding head, that faces the workpiece during application of the laser beam. During laser processing using the laser processing head, the laser beam may be required to be repositioned from being directed or focused onto one position to being directed or focused onto another position. Such repositioning is often implemented by a scanner-based system, e.g. laser scanning modules, by which the laser beam can be deflected and positioned, for example an arrangement of rotatable mirrors. However, when the laser beam is deflected, it does not propagate along the optical axis anymore, but is incident on a focusing optics with a certain angle. Therefore, special laser focusing modules may be required, for example F-Theta lenses or telecentric F-Theta lenses. The optical elements or lenses of the laser focusing module must be large compared to other optics in order to allow large deflections of the laser beam to achieve large scan fields. Generally, two factors limit the maximum possible or allowable scan field in a system with laser focusing module e.g. in a system with F-Theta objective. First, as the deflection angle increases, it becomes more difficult to achieve a focus whose size remains almost the same in the entire scan field so that the power density distribution of the laser beam in the processing plane does not change. Second, large deflection angles cause vignetting of the laser beam at optical element edges or the lens edges, especially in the "corners" of a scan field. This is a problem, especially at high laser powers, since not only is there a loss of power in the processing plane, but the missing energy may also be deposited in the lens, which can cause heating. The heating of the lenses often leads to a thermal focus shift, so that the focus position changes axially. In the worst case, the lenses may be destroyed. For this reason, the maximum usable scan field must often be limited, especially at high laser powers in the kW range, in order to keep vignetting and thus power losses small.

Typical scanners or laser scanning modules for beam deflection may cause the laser beam to hit the edges of the optical elements such as edges of the focusing lens and adjoining structures such as lens holders. For example, some laser scanning modules have two galvanometer motors with one mirror for adjusting x- direction and one mirror for adjusting y-direction of the laser beam. The two mirrors are located at different distances from the focusing module e.g. from the F-theta lens. As a result, if the deflection angle of both mirrors is identical, the beam in the direction defined by the more distant mirror will hit the edge of the F-Theta lens further and thus hit the lens edge earlier. For this reason, a limited scan field in the form of an ellipse is usually available. The short half-axis is defined by the farther away mirror, the long half-axis by the mirror closer to the scanning module. When a 2D Galvano-scanner with one mirror rotatable about two perpendicular axes is used, the allowable scan field has a circular shape. In order to simplify the operation for a user, the scan field is often limited, e.g. by software or a control unit, to a rectangular or square shape. In particular for a square shape, operation can be made independent from the orientation of the system. However, this further limits the available scan field. The problem of the laser beam hitting the edges, and adjoining structure, of the optical element through which the laser beam is passing through may also occur in laser processing heads which use laser scanning modules other than the two galvanometer motor based scanning mirrors or which use focusing modules other than ones comprising F-theta lens. To avoid hitting of the edges by laser beam, the allowable or usable scan field is limited. Furthermore, in order to make it easier for the user, a rectangular and/or a square scan field is often indicated, whereby the usable scan field is further limited.

### Summary

Thus, a laser processing head having a technique or mechanism for increasing a scan field of the laser beam is desired which at least partially obviates one or more of the above disadvantages. In particular, it is an object of the present disclosure to provide a laser processing head, and a laser processing system including the same, allowing to increase a scan field of the laser beam. Furthermore, it is an object of the present disclosure to provide a method for increasing a scan field of the laser beam of a laser processing head.

One or more of the above objects are achieved by the subject matter of the independent claims. Advantageous embodiments are provided in dependent claims.

The present invention is based on the idea that the scan field can be increased by reducing a diameter of the laser beam, in particular by cutting a peripheral portion or edge of the laser beam using a diaphragm. As a typical laser beam has an approximately Gaussian intensity distribution, the edges of the beam normally have too little intensity for contributing to the laser processing, but still a high enough intensity to limit the allowable or usable scan field.

In a first aspect of the present technique, a laser processing head is presented. The laser processing head includes a laser entry module for introducing a laser beam; a collimating module configured to collimate the laser beam; a scanning module configured to deflect the laser beam; a focusing module configured to focus the laser beam; and at least one diaphragm configured to limit a diameter or cross-sectional area of the laser beam passing therethrough in order to increase a scan field of the laser beam. The diaphragm comprises a diaphragm body and an opening. Thus, the diaphragm may be configured to limit a cross-sectional area of the laser beam by the diaphragm body, in other words by allowing a first portion of the cross-sectional area of the laser beam to pass through the opening while obstructing a second portion of the cross-sectional area of the laser beam by the diaphragm body. The at least one diaphragm is positioned between the laser entry module and the focusing module. In other words, the at least one diaphragm is positioned optically downstream of the laser entry module and optically upstream of the focusing module. The laser entry module may denote a position or structure at the laser processing head for coupling a laser beam into the laser processing head, such as a fiber coupler or the like.

The phrases "optically upstream", "upstream", "upstream direction", "optically downstream", "downstream", "downstream direction" and like phrases may be understood with reference to a propagation direction or path of travel of the laser beam from the laser entry module towards the focusing module.

The focusing module may comprise at least one focusing optical element, e.g. one or more focusing lenses.

The collimating module may comprise at least one collimating optical element, e.g. one or more collimating lenses.

The scanning module may comprise at least one scanning optical element, e.g. one or more scanning mirrors. The scanning module may be a 1D or 2D scanning module, or also a 3D scanning module configured for dynamically changing the focus position of the laser beam, e.g. including one or more movable lenses.

The focusing optical element and/or the collimating optical element and/or the scanning optical element may generally be referred to as the optical element.

The at least one diaphragm may be positioned, for example with respect to the focusing module or the collimating module or the scanning module, such that an entire cross-sectional area of the laser beam, or a boundary or an edge or a periphery or a perimeter of the entire cross-sectional area of the laser beam, having passed through the opening of the diaphragm is incident on, i.e. transmitted or reflected by, an optical surface of the optical element.

In other words, the diaphragm may be configured, e.g. has such dimensions and/or is positioned within the laser processing head, such that the laser beam that has passed through the opening of the diaphragm has a cross-section that was limited by the diaphragm body, and the cross-section of the laser beam so limited has a boundary or an edge or a periphery or a perimeter which is entirely incident on the optical surface of the optical element. Simply put, it can be prevented that a part or portion of the laser beam that has passed through the diaphragm falls outside the optical surface of the optical element, for example on a holder in which the optical element may be seated e.g. a lens holder or a mirror frame.

The diaphragm body may obstruct an entire edge, for example entire circumference or entire periphery or entire perimeter or entire boundary of the laser beam. For example, a part or portion of the laser beam obstructed by the diaphragm body may have a continuous or complete or regular or symmetrical annular shape. For this, the diaphragm, in particular the opening of the diaphragm, may be arranged coaxially with an optical axis of the laser processing head and/or with an optical axis of the optical element or with a beam propagation direction.

The diaphragm body may obstruct only a part of an entire edge of the laser beam. For example, a part or portion of the laser beam obstructed by the diaphragm body may have an open or incomplete or irregular or asymmetrical annular shape or a sickle shape, or may be shaped as a segment of the cross-sectional shape or area of the laser beam such as a circular segment.

The diaphragm may be configured such that the second portion of the laser beam may completely or partially surround the first portion of the laser beam. The diaphragm may be configured such that the second portion may extend continuously along an entire periphery or edge or perimeter of the laser beam or may extend only along a part of an entire periphery or edge or perimeter of the laser beam.

The opening of the diaphragm may be smaller than an optical surface or an aperture of the optical element e.g. smaller than an aperture of the focusing lens or the collimating lens. The term 'aperture' may be understood as the opening in or of the optical element through which light or the laser beam passes. In particular, a diameter of the opening of the diaphragm may be smaller than a diameter of the optical surface or the aperture of the optical element.

The at least one diaphragm may include a first diaphragm disposed at a first position i.e. between the laser entry module and the collimating module. The first diaphragm may limit the cross-sectional area of the laser beam propagating from the laser entry module to the collimating module.

The at least one diaphragm may include a second diaphragm disposed at a second position i.e. between the collimating module and the scanning module. The second diaphragm may limit the cross-sectional area of the laser beam propagating from the collimating module to the scanning module.

The at least one diaphragm may include a third diaphragm disposed at a third position i.e. between the scanning module and the focusing module. The third diaphragm may limit the cross-sectional area of the laser beam propagating from the scanning module to the focusing module.

An opening of the first diaphragm and/or an opening of the second diaphragm may have a circular shape.

An opening of the third diaphragm may have one of a circular shape, an oval shape and a rectangular shape. The shape of the opening of the third diaphragm may mimic or correspond to a shape of the allowable or usable scan field.

A cross-sectional area or diameter of an opening of the third diaphragm may be configured to be smaller than a cross-sectional area or diameter of an opening of the second diaphragm and/or than a cross-sectional area or diameter of an opening of the first diaphragm.

A cross-sectional area or diameter of an opening of the second diaphragm may be smaller than a cross-sectional area or diameter of an opening of the first diaphragm.

The at least one diaphragm may include a plurality of diaphragms. The diaphragms of the plurality of diaphragms may be arranged such that cross-sectional areas or diameters of openings of the diaphragms are reduced from optically upstream to optically downstream direction. The diaphragms of the plurality of diaphragms may be arranged at one or more of the first position, the second position and the third position. In other words, the first position may have the plurality of diaphragms, and/or the second position may have the plurality of diaphragms, and/or the third position may have the plurality of diaphragms, and/or the first position, the second position and the third position may together have the plurality of diaphragms with each position having one or more diaphragms.

A cross-sectional area or diameter of an opening of one diaphragm may be smaller than a cross-sectional area or diameter of an opening of another diaphragm which is positioned optically upstream from the one diaphragm.

The at least one diaphragm may be configured such that the laser beam having passed through the diaphragm has a width less than a width of the laser beam received at the at least one diaphragm, e.g. a width corresponding to 1/e² of the width of the laser beam incident at the diaphragm, or in other words a radius of the laser beam having passed through the diaphragm may be less than a radius of the laser beam incident at the diaphragm, e.g. 1/e² of a radius of the laser beam incident at the diaphragm. The laser beam may be a Gaussian beam or may be laser beam having a substantially Gaussian-shaped intensity distribution. Alternatively, the laser beam may have a top-hat or ring-shaped intensity distribution.

The at least one diaphragm may be configured such that an intensity of the laser beam exiting optically downstream therefrom is less than a total intensity of the laser beam received at the at least one diaphragm, e.g. between 75% and 90%, preferably between 85% and 87%, and more preferably about 86.5% of a total intensity of the laser beam received at the at least one diaphragm.

The cross-sectional areas or diameters of the openings of the first diaphragm, the second diaphragm and the third diaphragm may be such that an intensity of the laser beam exiting the diaphragm positioned farthest downstream is less than a total intensity of the laser beam received at the at least one diaphragm, e.g. between 75% and 90%, preferably between 85% and 87%, and more preferably about 86.5% of a total intensity of the laser beam received at the diaphragm positioned farthest upstream.

The cross-sectional areas or diameters of the openings of the plurality of diaphragms may be configured such that an intensity of the laser beam exiting the diaphragm positioned farthest downstream is less than a total intensity of the laser beam received at the at least one diaphragm, e.g. between 75% and 90%, preferably between 85% and 87%, and more preferably about 86.5% of a total intensity of the laser beam received at the diaphragm positioned farthest upstream.

The at least one diaphragm may be configured to adjustably or variably limit a cross-sectional area of the laser beam, e.g. a cross-sectional area of the first portion of the laser beam, passing therethrough. This can be performed manually or automatically. By these means, the limitation of the cross-sectional area of the laser beam may be variable or switchable, e.g. depending on the application of the laser processing. The at least one diaphragm may be switchable between a configuration limiting a cross-sectional area of the laser beam and a configuration not limiting the cross-sectional area of the laser beam. Thus, the cross-sectional area of the laser beam can also remain unchanged.

The at least one diaphragm may be configured to vary or adjust a cross-sectional area of the opening of the at least one diaphragm in order to variably or adjustably limit the cross-sectional area of the laser beam passing therethrough. Thus, the diaphragm may be configured with an iris-like aperture or opening.

The at least one diaphragm may be configured to move along an optical axis of the diaphragm and/or in a plane perpendicular to the optical axis of the diaphragm in order to variably or adjustably limit the cross-sectional area of the laser beam passing therethrough. For this, the laser processing head may include an actuator for moving the diaphragm, such as a motor.

The at least one diaphragm may be configured to move or slide or translate in an axial direction and/or a radial direction with respect to an axis of the laser beam and/or with respect to an optical axis of the optical element and/or with respect to an optical axis of the diaphragm, e.g. with respect to a propagational direction of the laser beam, to variably or adjustably limit the cross-sectional area of the laser beam passing therethrough. For this, the laser processing head may include an actuator for moving the diaphragm, such as a motor. Also, the diaphragm may be configured to be removed from the beam path of the laser processing head by rotating around an axis parallel to its optical axis or pivoting around an axis perpendicular to its optical axis.

The diaphragm body may comprise a coolant-based cooling mechanism to remove heat from the diaphragm body, for example a water-based cooling mechanism.

The diaphragm body may comprise a surface coating configured to increase absorption when a portion of the laser beam hits the diaphragm body.

The diaphragm body may comprise a beam trap configured to trap, by repeated total internal reflections, a portion of the laser beam hitting the diaphragm body. The beam trap may be defined within the diaphragm body.

The diaphragm body may comprise a reflector and an absorbing unit, wherein the reflector may be configured to reflect a portion of the laser beam hitting the diaphragm body, e.g. at least a part of the second portion of the laser beam, towards the absorbing unit which in turn may be configured to absorb said reflected portion of the laser beam.

The scanning module may be configured to deflect the laser beam in one-dimension or in two-dimensions. The scanning module may be a galvanometer scanner. The scanning module may include one or more mirrors.

The focusing module may comprise a F-Theta lens, e.g. the optical element of the focusing module may be a F-Theta lens.

The laser processing head may include a sensor module comprising one or more sensors configured to sense a laser power of a portion of the laser beam having passed through the opening of the diaphragm and/or to sense a laser power absorbed by the diaphragm body and/or to sense a laser power of the laser beam entering the laser processing head.

One or more of the sensors of the sensor module, for example a sensor configured to sense a laser power of a portion of the laser beam having passed through the opening of the diaphragm, may be positioned or located at an opening through which the laser beam exits the laser processing head, e.g. an opening of a nozzle. One or more of the sensors of the sensor module, for example a sensor configured to sense a laser power of the laser beam entering the laser processing head, may be positioned or located at the laser entry module.

As previously mentioned, the diaphragm body may have the coolant-based cooling mechanism e.g. water-cooled diaphragm. The sensor module may include a temperature sensor to measure or determine a temperature of the coolant or the water in order to determine one or both laser powers i.e. the laser power of the portion of the laser beam having passed through the opening of the diaphragm and the laser power absorbed by the diaphragm body.

The laser processing head may include a safety switch for turning off the laser beam based on a laser power of the portion of the laser beam having passed through the opening of the diaphragm and/or based on a laser power absorbed by the diaphragm body, and/or based on a temperature of the diaphragm body sensed by the temperature sensor, for example when at least one of the laser power of the portion of the laser beam having passed through the opening of the diaphragm, the laser power absorbed by the diaphragm body and the sensed temperature is determined to be above a predetermined value, or a critical value.

In a second aspect of the present technique, a laser processing system is presented. The laser processing system may comprise a laser processing head according to the first aspect and its herein-described embodiments of the present technique, and at least one of a laser source module configured to generate the laser beam and a processor for controlling the laser processing head.

The laser source module may comprise a single-mode laser source or a multi-mode laser source. The laser source module may be configured to generate a laser power of 200 Watt or more, in particular of multi-kW (multi-kilowatt), for example, a laser beam having a power equal to or greater than 200 W, or equal to or greater than 6kW, preferably equal to or greater than 8 kW. The laser source module may include or be at least one of a disc laser, a diode laser, a single-mode fiber laser or a multi-mode fiber laser.

The laser processing system may further comprise the processor for controlling the laser processing head, in particular at least one of its components, such as the diaphragm and/or the scanning module, and/or the laser source module and/or at least one of the collimating module and the focusing module for adjusting a focus position of the laser beam.

The processor may be configured to control the laser source module to adjust a laser power of the laser beam, e.g. according to a sensed or determined laser power of a portion of the laser beam having passed through the opening of the diaphragm, and/or according to a sensed laser power absorbed by the diaphragm body, and/or according to a sensed temperature of the diaphragm (or a coolant of the diaphragm), and/or according to a scan position of the laser beam deflected by the scanning module.

The processor may be configured to control the diaphragm, e.g. a position of the diaphragm and/or a diameter of its opening. The processor may be configured to control the diaphragm to adjust or vary the cross-sectional area of the laser beam passing through the diaphragm, for example according to a sensed or determined laser power of a portion of the laser beam having passed through the opening of the diaphragm and/or according to a sensed laser power absorbed by the diaphragm body and/or according to a sensed temperature of the diaphragm (or a coolant of the diaphragm) and/or according to a scan position of the laser beam deflected by the scanning module. The processor may be configured to control a position of the diaphragm and/or a diameter of the opening of the diaphragm according to a sensed or determined laser power of a portion of the laser beam having passed through the opening of the diaphragm and/or according to a sensed laser power absorbed by the diaphragm body and/or according to a sensed temperature of the diaphragm (or a coolant of the diaphragm) and/or according to a scan position of the laser beam deflected by the scanning module. The processor may be configured to control the diaphragm limit a diameter or cross-sectional area of the laser beam passing therethrough only when the scanning module deflects the laser beam within a predefined area at the edge of the scan field and/or towards a peripheral edge of the optical element.

The processor may be configured to control a safety switch based on the laser power of the portion of the laser beam having passed through the opening of the diaphragm and/or based on the laser power absorbed by the diaphragm body, and/or based on a sensed temperature of the diaphragm (or a coolant of the diaphragm).

In a third aspect of the present technique, a method for controlling a laser processing head for increasing a scan field of the laser beam is presented. The method may be for a laser processing head according to the first aspect of the present technique or for a laser processing system according to the second aspect of the present technique. In the method, a laser beam is introduced at the laser entry module, then the laser beam is collimated by the collimating module, then the laser beam is deflected by the scanning module, and then the laser beam is focused, for example on a workpiece, by the focusing module. Before the focusing of the laser beam or within a beam path of the laser processing head between the laser entry module and the focusing module, a cross-sectional area of the laser beam is limited by the diaphragm body by passing the laser beam through the diaphragm. In other words, a first portion of the cross-sectional area of the laser beam is passed through the opening while obstructing a second portion of the cross-sectional area of the laser beam by the diaphragm body.

In the method, the cross-sectional area of the laser beam limited by the diaphragm body may be varied or adjusted, e.g. a cross-sectional area of the first portion of the laser beam may be increased or reduced.

In the method, the diaphragm may be controlled to vary or adjust the cross-sectional area of the laser beam passing therethrough. For instance, the diaphragm may be controlled to vary or adjust, i.e. increase or reduce, a cross-sectional area or diameter of the opening of the at least one diaphragm to vary or adjust the cross-sectional area of the laser beam passing therethrough. Alternatively or additionally, the at least one diaphragm may be moved along or parallel to an optical axis of the diaphragm and/or in a plane perpendicular to the optical axis of the diaphragm to vary or adjust the cross-sectional area of the laser beam passing therethrough.

In the method, the diaphragm may be controlled to limit a diameter or cross-sectional area of the laser beam passing therethrough when (or only when) the scanning module deflects the laser beam into a predefined area at the edge of the scan field and/or towards a peripheral edge of the optical element.

In the method, the laser source module may be controlled to adjust a laser power of the laser beam according to a sensed or determined laser power of a portion of the laser beam passed through the opening of the diaphragm and/or according to a sensed laser power absorbed by the diaphragm body. Also, the laser source module may be controlled to increase the laser power of the laser beam when the diameter or cross-sectional area of the laser beam is limited by the diaphragm and/or when the scanning module deflects the laser beam into a predefined area at the edge of the scan field and/or towards a peripheral edge of the optical element.

In the method, the diaphragm may be controlled to adjust or vary the cross-sectional area of the laser beam passing through the diaphragm, for example according to a sensed or determined laser power of a portion of the laser beam having passed through the opening of the diaphragm and/or according to a sensed laser power absorbed by the diaphragm body.

In the method, one or both of the laser power of a portion of the laser beam having passed through the opening of the diaphragm and of the laser power absorbed by the diaphragm body may be determined or sensed by the sensor module.

In the method, a safety switch may be controlled to turn off the laser source module, in particular when a sensed temperature, e.g. a temperature of the diaphragm, exceeds a threshold or critical value.

### Brief description of the drawings

Any references to 'radial', 'radially', 'circumferential', 'circumferentially' and like phrases is to be understood with reference to a central axis of the component being referred to, unless otherwise stated.

The above mentioned attributes and other features and advantages of the present technique and the manner of attaining them will become more apparent and the present technique itself will be better understood by reference to the following description of embodiments of the present technique taken in conjunction with the accompanying drawings, wherein:
FIG 1 schematically depicts a simplified exemplary embodiment of a laser processing system having a laser processing head of the present technique in which at least one diaphragm of the present technique is incorporated;
FIGs 2A and 2B schematically depict functioning of an exemplary embodiment of the at least one diaphragm;
FIGs 3A, 3B and 3C schematically depict increasing of scan field of the laser beam by the at least one diaphragm in comparison to laser beam projected without the at least one diaphragm;
FIG 4 schematically depicts an exemplary embodiment wherein the diaphragm body obstructs only a part of an entire edge of the laser beam;
FIG 5 schematically depicts an exemplary embodiment wherein the at least one diaphragm adjusts a cross-sectional area of the opening of the diaphragm to adjustably limit the cross-sectional area of the laser beam passing therethrough;
FIG 6 schematically depicts an exemplary embodiment wherein the at least one diaphragm is moveable parallel to an optical axis of the diaphragm to adjustably limit the cross-sectional area of the laser beam passing therethrough;
FIG 7 schematically depicts an exemplary embodiment wherein the at least one diaphragm is moveable in a plane perpendicular to an optical axis of the diaphragm to adjustably limit the cross-sectional area of the laser beam passing therethrough;
FIG 8 schematically depicts an exemplary embodiment of the at least one diaphragm having a plurality of diaphragms to successively limit the cross-sectional area of the laser beam passing therethrough;
FIG 9 schematically depicts an exemplary embodiment of the at least one diaphragm having a coolant-based cooling mechanism;
FIG 10A schematically depicts an exemplary embodiment of the at least one diaphragm;
FIG 10B schematically depicts an exemplary embodiment of the at least one diaphragm having a surface coating;
FIG 11 schematically depicts an exemplary embodiment of the at least one diaphragm having a beam trap; and
FIG 12 schematically depicts an exemplary embodiment of the at least one diaphragm having a reflector and an absorbing unit; in accordance with aspects of the present technique.

### Detailed description

Hereinafter, above-mentioned and other features of the present technique are described in detail. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

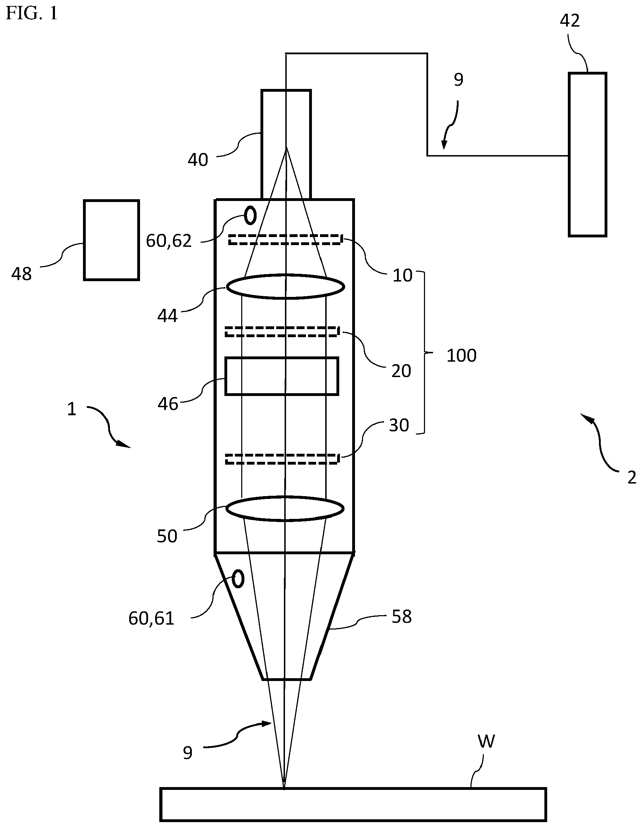

FIG 1 depicts a laser processing system 2 having a laser processing head 1, such as a laser cutting head or a laser welding head, in which at least one diaphragm 100 according to the present technique is incorporated.

The laser processing system 2 may be any system which is used to transmit or irradiate a laser beam onto a target surface or a workpiece W. The laser processing system 2 may be one of, but not limited to, a laser cutting system, a laser engraving system, a laser ablation system, a laser drilling system, a laser beam machining system, a laser beam welding system, a laser hybrid welding system, a laser soldering system, an additive manufacturing system using laser such as a laser printing system, a laser cladding system, and so on and so forth.

The laser processing system 2 may include a laser beam generation source or laser source module 42, for generating a laser beam 9, and a laser processing head 1. The laser processing system may optionally include a processor 48.

The laser source module 42 may comprise a single-mode laser source or a multi-mode laser source. The laser source module 42 may be configured to generate a laser beam having a power of several hundreds of Watt, or a multi-kilowatt laser beam, e.g. of 2kW or greater, for example 6kW and greater or 8kW and greater.

The laser processing head 1 may include a housing within which components of the laser processing head 1, e.g. optical elements for guiding the laser beam 9, may be disposed.

The laser processing head 1 includes a laser entry module 40 for introducing the laser beam 9, a collimating module 44 for collimating the laser beam 9, a scanning module 46 for scanning or deflecting the laser beam 9, and a focusing module 50 for focusing the laser beam 9 onto a work piece W.

The laser beam 9 may be fed to the laser processing head 1 via the laser entry module 40. The laser beam 9 is directed from the laser entry module 40 towards the focusing module 50, and thus defining an overall or general direction of transmission of the laser beam 9. The position or optical position of the different components relative to each other may be understood accordingly, for example, a location or position of the laser entry module 40 may be understood as an optically upstream location or position, whereas a location or position of the focusing module 50 may be understood as an optically downstream location or position. A direction generally extending from the laser entry module 40 towards the focusing module 50 may be understood as optically downstream, whereas a direction generally extending from the focusing module 50 towards the laser entry module 40 may be understood as optically upstream. All the directions may be understood along a direction of propagation or travel or transmission of the laser beam from the laser entry module 40 towards the focusing module 50. It may be noted that in the embodiment of FIG 1 the laser entry module 40, the collimating module 44, the scanning module 46 and the focusing module 50 are linearly arranged, i.e. along a line. However, the depicted embodiment of FIG 1 is only for exemplary purpose, and the present technique is not limited to the linear arrangement of the modules 40, 44, 46, 50. In other embodiments (not shown), the modules 40, 44, 46, 50 may be arranged differently, for example the laser entry module 40 and the collimating module 44 may be arranged normally or at an angle to the scanning module 46 and the focusing module 50.

The laser source module 42 may be coupled to the laser entry module 40, for example by optical fibers. The laser beam 9 generated by the laser source module 42 may be fed or introduced or provided to the laser processing head 1 at or via the laser entry module 40. The laser entry module 40 may be for example be exit ends of the optical fibers (not shown).

The laser beam 9 emerging out of the laser entry module 40 is directed towards the collimating module 44. The collimating module 44 may comprise at least one collimating optical element, e.g. one or more collimating lenses. The laser beam 9 is collimated by the collimating module 44. The collimated laser beam 9 may then be directed towards the scanning module 46.

The scanning module 46 may deflect the laser beam 9 in one-dimension or in two-dimensions. The scanning module 46 may comprise at least one scanning optical element, e.g. one or more scanning mirrors.

In order to position the laser beam 9 in two dimensions, either a one mirror arrangement is used in which the mirror is rotated along two axes e.g. two orthogonal axis or X-axis and Y-axis, or a two mirror arrangement is used that has two closely spaced mirrors - one for each orthogonal axis to reflect the laser beam along the corresponding axis. Each of the two mirrors may be driven by a galvanometer or by other actuation means such as an electric motor. For example, the scanning module may be a galvanometer scanner i.e. the scanning module 46 may have two galvanometers, each having a corresponding reflector such as a mirror to deflect the laser beam 9.

The laser beam 9 deflected or positioned or steered by the scanning module 46 is directed towards the focusing module 50. The laser beam 9 is focused by the focusing module onto the workpiece W.

The focusing module 50 may comprise at least one focusing optical element, e.g. one or more focusing lenses. The focusing module 40 may comprise a F-Theta lens. In other words, the focusing optical element may be a F-Theta lens.

The laser beam 9 may exit the laser processing head 1 through or via an exit opening or nozzle 58. The nozzle 58 may be located optically downstream of the focusing module 50.

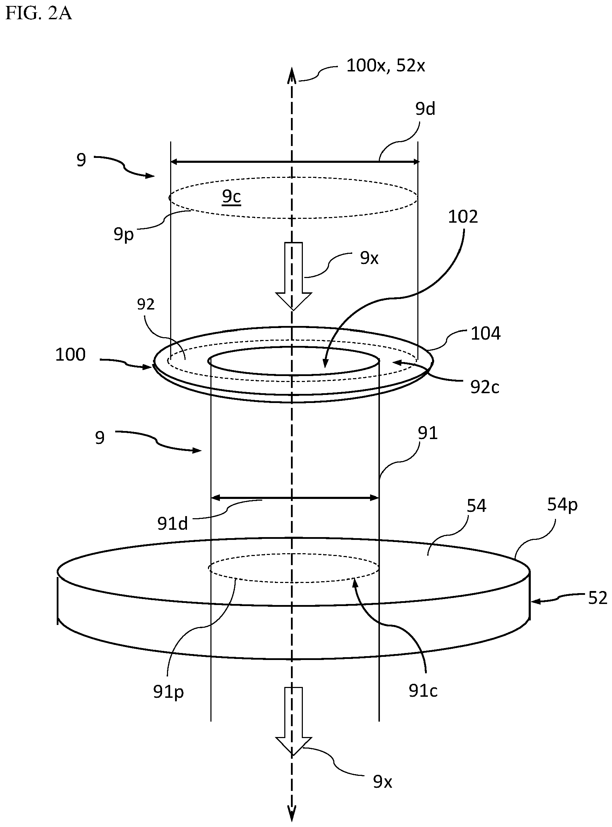

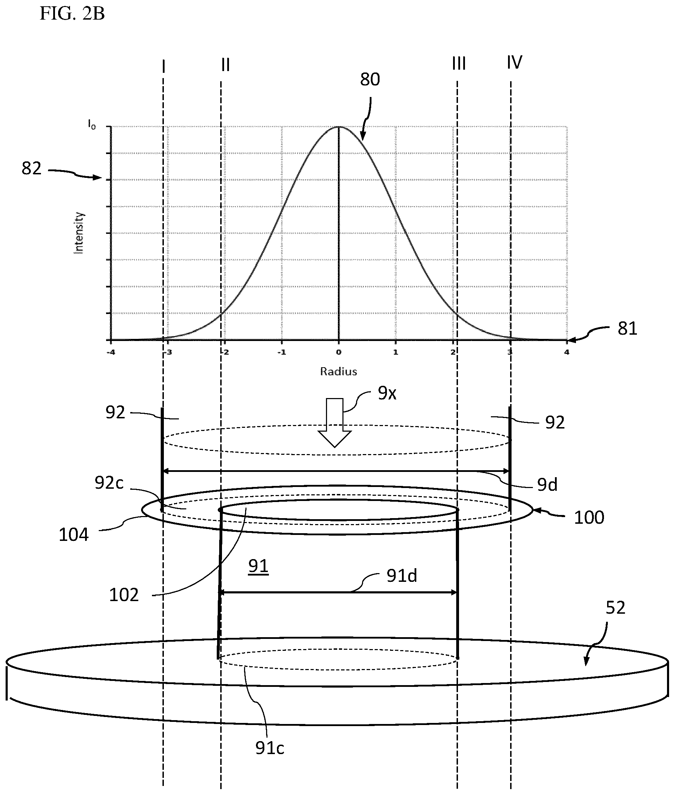

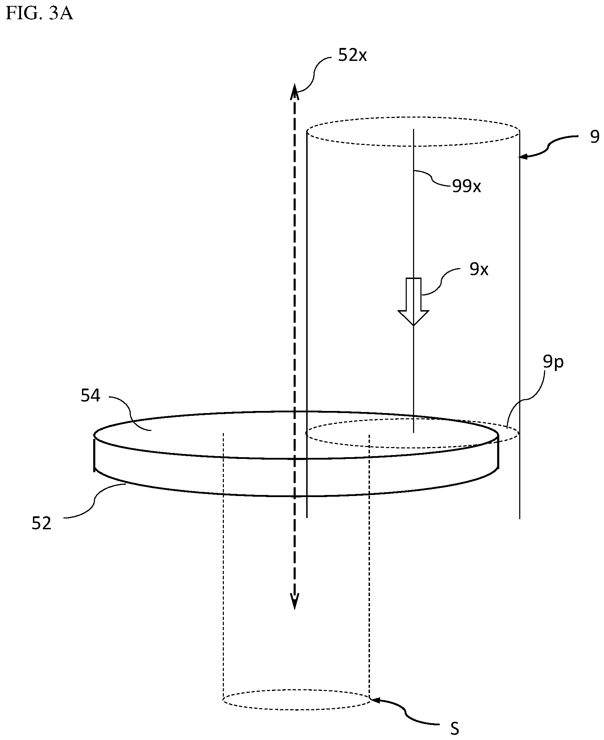

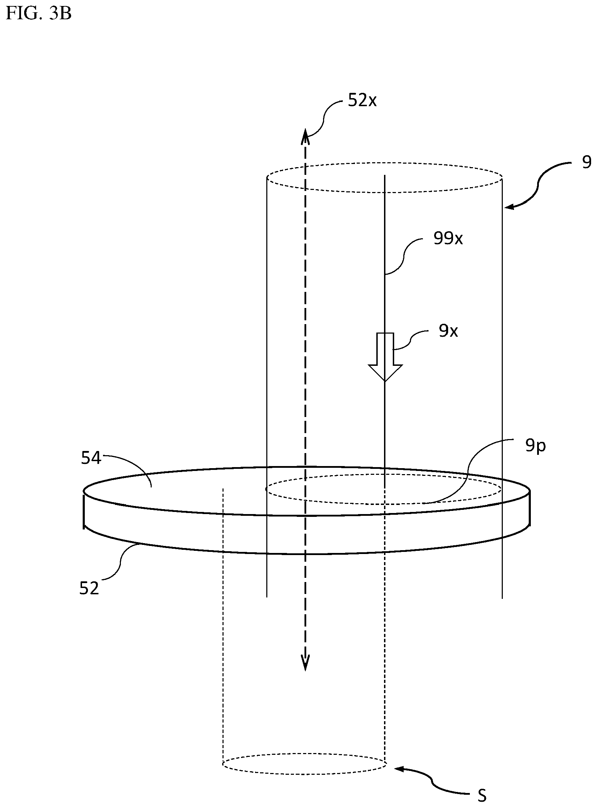

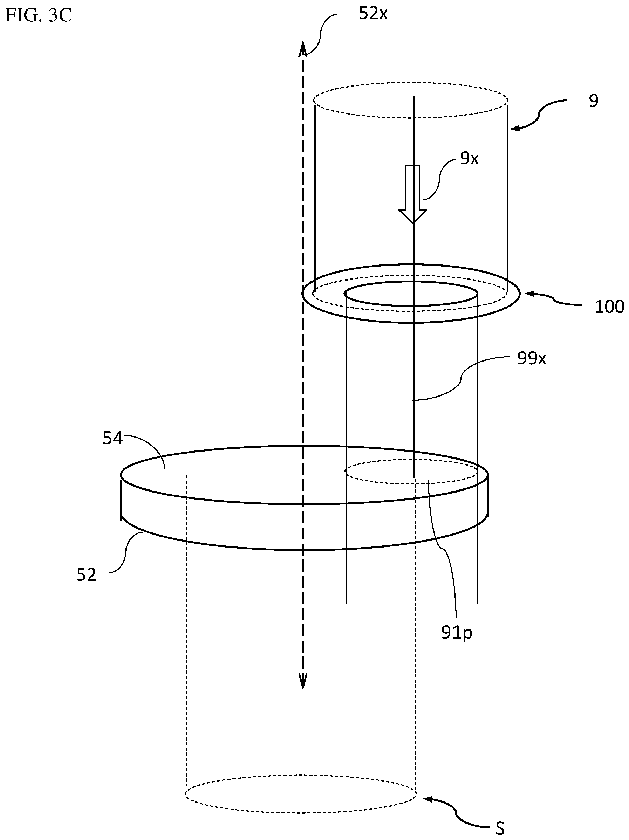

The laser processing head 1 further comprises at least one diaphragm 100 configured to limit a diameter or cross-sectional area of the laser beam 9 passing therethrough in order to increase a scan field of the laser beam 9. The structure and function of the diaphragm 100 has been explained later with reference to FIGs 2A and 2B, and the increasing of scan field has been explained later with reference to FIGs 3A, 3B and 3C.

As shown in FIG 1, the at least one diaphragm 100 may include a first diaphragm 10 positioned between the laser entry module 40 and the collimating module 44. The first diaphragm 10 may limit the cross-sectional area of the laser beam 9 transmitted from the laser entry module 40 towards the collimating module 44. The position or location between the laser entry module 40 and the collimating module 44 may be referred to as a first position.

The at least one diaphragm 100 may include a second diaphragm 20 positioned between the collimating module 44 and the scanning module 46. The second diaphragm 20 may limit the cross-sectional area of the laser beam 9 transmitted from the collimating module 44 towards the scanning module 46. The position or location between the collimating module 44 and the scanning module 46 may be referred to as a second position. Generally, at this position, all beams in the laser processing head are coaxial. For instance, optical beams of coaxial illumination systems or of distance measuring systems, such as optical coherence tomography (OCT), conoscope, intensity-based measuring systems, etc., may be combined with the laser beam by a beam splitter. Thus, the second diaphragm 20 may prevent too high intensity of these optical beams being incident on the following optical elements and reduce a scattering of light for improving a signal to noise ratio or a contrast.

The at least one diaphragm 100 may include a third diaphragm 30 positioned between the scanning module 46 and the focusing module 50. The third diaphragm 30 may limit the cross-sectional area of the laser beam 9 transmitted from the scanning module 46 towards the focusing module 50. The position or location between the scanning module 46 and the focusing module 50 may be referred to as a third position.

The at least one diaphragm 100 may include only one of, only two of or all of the first diaphragm 10, the second diaphragm 20 and the third diaphragm 30. For example the at least one diaphragm 100 may include only the first diaphragm 10, or only the second diaphragm 20, or only the third diaphragm 30, or only the first diaphragm 10 and the second diaphragm 20, or only the first diaphragm 10 and the third diaphragm 30, or only the second diaphragm 20 and the third diaphragm 30, or all of the first diaphragm 10, the second diaphragm 20 and the third diaphragm 30.

In general, the at least diaphragm 100 is positioned optically downstream of the laser entry module 40 and optically upstream of the focusing module 50.

Hereinafter, structure and function of an exemplary embodiment of the at least one diaphragm 100 is described with reference to FIGs 2A and 2B, FIGs 3A to 3C and FIG 10A.

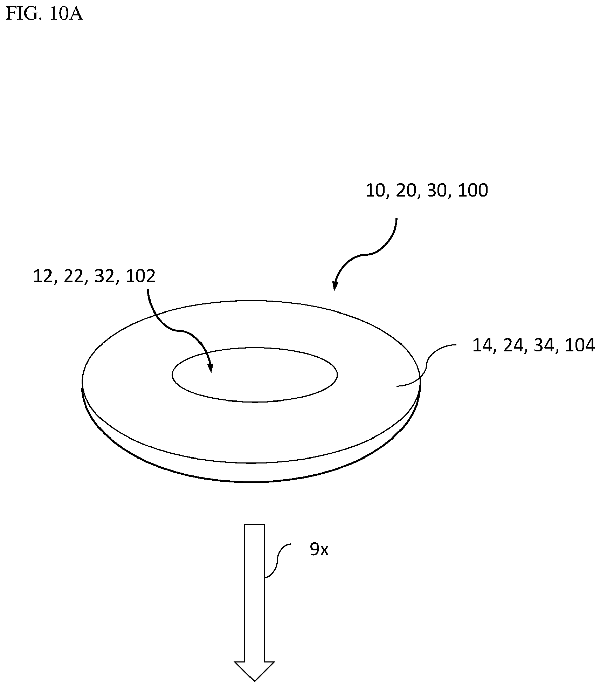

As shown in FIG 10A, the first diaphragm 10 comprises a diaphragm body 14 and an opening 12. The second diaphragm 20 comprises a diaphragm body 24 and an opening 22. The third diaphragm 30 comprises a diaphragm body 34 and an opening 32. The first, second and/or the third diaphragm 10, 20, 30 have been represented as the diaphragm 100 hereinafter. The description provided with respect to the diaphragm 100 is also applicable to each of the first, the second and the third diaphragms 10, 20, 30. The diaphragm 100 comprises a diaphragm body 104 and an opening 102. The diaphragm 100 may have an annular shape, wherein the diaphragm body 104 defines the opening 102. The diaphragm body 104 may have a planar shape for example a disk shape. Generally, the at least one diaphragm 100 is positioned optically downstream of the laser entry module 40 and optically upstream of the focusing module 50, in other words the at least one diaphragm 100 is positioned optically between the laser entry module 40 and the focusing module 50.

As previously mentioned, the focusing module 50 may comprise at least one focusing optical element, e.g. one or more focusing lenses. Similarly, the collimating module 44 may comprise at least one collimating optical element, e.g. one or more collimating lenses. Also, the scanning module may comprise at least one scanning optical element, e.g. one or more scanning mirrors. The focusing optical element and/or the collimating optical element and/or the scanning optical element may generally be referred to as the optical element 52.

FIG 2A shows functioning of the diaphragm 100, for example the diaphragm 100 may be the third diaphragm 30, positioned between the scanning module 46 and the focusing module 50.

Generally, the diaphragm 100 is positioned upstream of the optical element 52, e.g. upstream of a F-theta lens functioning as the focusing optical element 52. Arrows 9x depict a direction of propagation or travel of the laser beam 9. The diaphragm 100 and the optical element 52 may be disposed to be spaced apart from each other, i.e. may not be in contact with each other.

The diaphragm 100 limits a cross-sectional area 9c of the laser beam 9 by the diaphragm body 104. In other words, the diaphragm 100 is dimensioned and positioned to allow a first part or portion 91 of the laser beam 9 to pass through the opening 102, while obstructing a second part or portion 92 of the laser beam 9 by the diaphragm body 104. The obstructing may be performed by physically blocking the beam, and for this purpose at least a part of the diaphragm body 104 may be disposed in the path of travel or propagation path of the laser beam 9. In other words, the cross-sectional area 9c of the laser beam 9 is sectioned or divided or cleaved by the diaphragm 100 into a cross-sectional area 91c of the laser beam 9 thereby defining the first portion 91 of the laser beam 9 which is allowed to pass towards the downstream side of the diaphragm 100 through the opening 102, and into a cross-sectional area 92c of the laser beam 9 thereby defining the second portion 92 of the laser beam 9 which is obstructed or stopped at the upstream side of the diaphragm 100 by the diaphragm body 104. In short, a part of the laser beam 9, i.e. the second portion 92, of the laser beam 9 is stopped by the diaphragm body 104 from being propagated or transmitted towards the optical element 52.

Simply put, as shown in FIG 2A, the diaphragm 100 limits a cross-sectional area of the laser beam 9. To explain further, a cross-sectional area 91c of the laser beam 9 having passed through the diaphragm 100, i.e. the cross-sectional area 91c of the first portion 91 of the laser beam 9, is smaller than a cross-sectional area 9c of the laser beam 9 upstream of the diaphragm 100 i.e. the laser beam 9 when received at the diaphragm 100.

In other words, as shown in FIG 2A, the diaphragm 100 limits a diameter of the laser beam 9. To explain further, a diameter 91d of the laser beam 9 having passed through the diaphragm 100, i.e. the diameter 91d of the first portion 91 of the laser beam 9, is smaller than a diameter 9d of the laser beam 9 upstream of the diaphragm 100 i.e. the laser beam 9 when received at the diaphragm 100.

In other words, as shown in FIG 2A, the diaphragm 100 limits a periphery 9p of the laser beam 9. To explain further, a periphery or edge 91p of the laser beam 9 having passed through the diaphragm 100, i.e. the periphery 91p of the first portion 91 of the laser beam 9, is smaller than the periphery 9p of the laser beam 9 upstream of the diaphragm 100 i.e. the laser beam 9 when received at the diaphragm 100.

It may be noted that although FIG 2A, and some other FIGs show an optical axis 100x of the diaphragm 100 to be coincident or coaxial with an optical axis 52x of the optical element 52, the diaphragm 100 may be arranged such that the optical axis 100x of the diaphragm 100 may not be coincident with the optical axis 52x of the optical element 52, for example the optical axis 100x of the diaphragm 100 may be disposed parallel to and spaced apart from the optical axis 52x of the optical element 52 e.g. as shown in FIG 3C.

The diaphragm 100 may be disposed in the path of the laser beam 9 propagating towards the optical element 52, for example propagating towards the focusing module 50 after being deflected by the scanning module 46.

The laser processing head 1 may include a diaphragm positioning mechanism (not shown) configured to dispose and remove, i.e. reversibly dispose and remove, the diaphragm 100 in and from the path of the laser beam 9 propagating towards the optical element 52. By removing or disposing the diaphragm 100 in the path of the laser beam 9, beam characteristics such as power density distribution and beam size i.e. width or cross-sectional area of the laser beam 9, may be changed.

The laser processing head 1 may include a diaphragm aligning mechanism (not shown) configured to align, i.e. to move the diaphragm 100 for aligning or orienting the diaphragm 100 with respect to the laser beam 9. In other words, the laser beam 9 may be incident onto a first location on the optical surface 54 of the optical element 52 along with the diaphragm 100 disposed in the beam path, and then the laser beam 9 may be repositioned to be incident onto a second location on the optical surface 54 of the optical element 52. When the laser beam 9 is repositioned, the diaphragm aligning mechanism aligns or repositions the diaphragm 100 accordingly or correspondingly, such that the diaphragm 100 is redisposed or continues to remain disposed in the beam path of the laser beam 9 propagating towards the optical element 52. The movement of the diaphragm 100 for repositioning of the diaphragm 100 may be performed simultaneously along with the scanning movement of the laser beam 9 i.e. while the laser beam 9 is being repositioned by the scanning module 46.

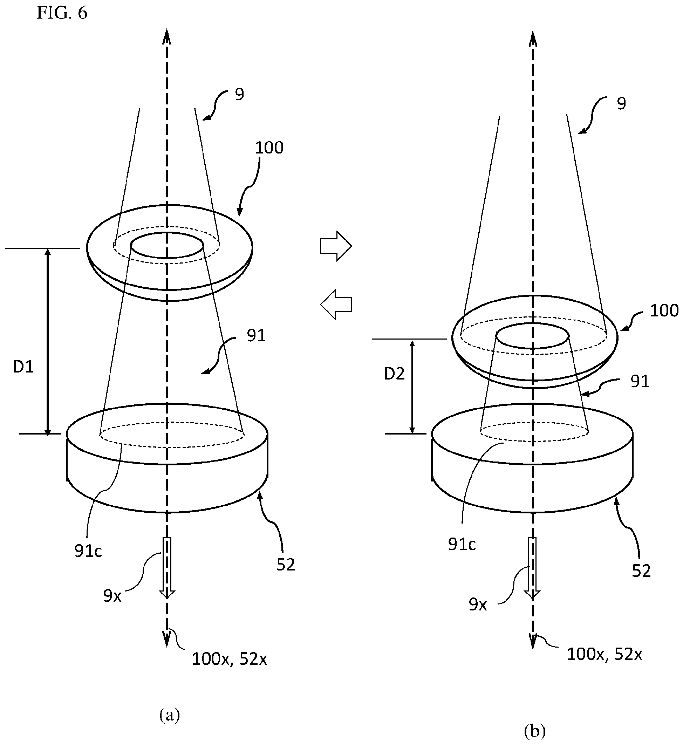

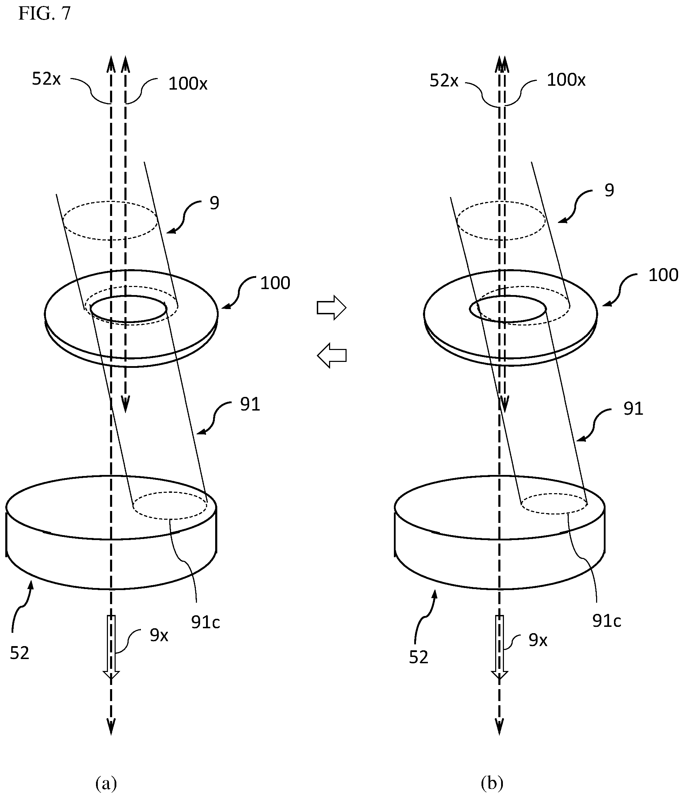

The diaphragm aligning mechanism may be configured to move the diaphragm parallel to or along the optical axis 100x of the diaphragm 100 and/or parallel to or along the optical axis 52x of the optical element 52 and/or in a plane perpendicular to the optical axis 100x of the diaphragm 100 and/or perpendicular to the optical axis 52x of the optical element 52 - to variably or adjustably limit the cross-sectional area 91c of the laser beam 9 passing therethrough. The variable or adjustable limiting of the cross-sectional area 9c of the laser beam 9 has been explained later with respect to FIGs 6 and 7.

FIG 2B shows the laser beam 9 and parts of the laser beam 9 i.e. the first portion 91 that is allowed to pass through the opening 102 and the second portion 92 that is obstructed by the diaphragm body 104, and their corresponding intensity or power distributions as shown by the curve 80. The curve 80 shows intensity or power distribution of the laser beam 9 with respect to a radius or radial distance from a central axis of the laser beam 9. Axis 81 depicts the radial distance or beam waist 'co' whereas the axis 82 depicts the intensity 'I'. Lines I, II, III and IV have been included to depict the correspondence of sections of the curve 80 or of area under the curve 80 with sections or portions, e.g. the first portion 91 and the second portion 92, of the laser beam 9.

The curve 80 represents a typical laser beam 9 having a Gaussian-shaped intensity distribution or an intensity distribution similar to a Gaussian-shaped intensity distribution. I₀ i.e. the maximum value provided on the axis 82 describes the intensity, and correspondingly the power, at its maximum. Radial distance ω₀, i.e. distance from the center axis of the laser beam 9 depicts the distance or radius, at which the intensity of the beam drops to 1/e² of the maximum. The areas of the beam 9 farther away from the center axis of the beam 9 experience a further drop in intensity, i.e. lesser than 1/e², as can be seen from FIG 2B.

As can be seen from FIG 2B, the at least one diaphragm 100 allows the portion of the beam 9 with higher intensity or higher power density distribution to pass through such as portion of the beam between lines II and III, and obstructs one or more peripheral portions of the beam 9 such as the portion of the beam between lines I and II and portion of the beam between lines III and IV which represent lower intensity or lower power density distribution. Simply put the portion of the beam 9 with relatively lower intensity, such as the second portion 92, are stopped by the diaphragm 100 whereas the portion of the beam 9 with relatively higher intensity, such as the first portion 91, are allowed by the diaphragm 100 to pass therethrough. More precisely, the portion of the beam 9 with relatively lower intensity to radial distance ratio of the beam 9, such as the second portion 92, are stopped by the diaphragm 100 whereas the portion of the beam 9 with relatively higher intensity to radial distance ratio of the beam 9, such as the first portion 91, are allowed by the diaphragm 100 to pass therethrough. In short, the first portion 91 of the laser beam 9 has a greater intensity to cross-sectional area ratio, as compared to intensity to cross-sectional area ratio of the second portion 92. Simply put, the power density distribution of the first portion 91 of the laser beam 9 is greater than or higher than the power density distribution of the second portion 92 of the laser beam 9.

As explained above, ω₀ is radial distance from the central axis of the laser beam 9 at which the intensity has dropped to 1/e² i.e. approx. 13.5%. The energy beyond or outside of the radius ω₀, for example in the region of the laser beam 9 between the lines I and II and between the lines III and IV, may be high enough to heat up and destroy structures but may be too low or little to be used for processing. Thus, the diaphragm 100 is such that the first portion 91 of the laser beam 9 extends from the central axis of the laser beam 9 up to a radial distance ω₀, and the second portion 92 of the laser beam 9 extends beyond or radially outward of radial distance ω₀.

In other words, the diaphragm 100 may be configured, i.e. positioned and/or oriented and/or dimensioned such that the laser beam 9 passing through the diaphragm has 1/e² width or radius of the laser beam 9 received at the diaphragm 100. In other words, the diameter 91d or radius of the first portion 91 of the laser beam 9 is 1/e² of the diameter 9d or radius of the laser beam 9 upstream of the diaphragm 100.

The at least one diaphragm 100 may be configured such that an intensity of the laser beam exiting optically downstream therefrom is between 75% and 90%, preferably between 85% and 87%, and more preferably about 86.5% of a total intensity of the laser beam received at the at least one diaphragm.

When the at least one diaphragm 100 includes at least two of the first, the second and the third diaphragm 10, 20, 30, the cross-sectional areas of the openings of the first diaphragm 10, the second diaphragm 20 and the third diaphragm 30 may be such that an intensity of the laser beam 9 exiting the diaphragm 100 positioned farthest downstream is between 75% and 90%, preferably between 85% and 87%, and more preferably about 86.5% of a total intensity of the laser beam 9 received at the diaphragm 100 positioned farthest upstream.

For comparative understanding, FIG 3A shows a laser beam 9 having a central axis 99x and whose cross-sectional area has not been limited by the diaphragm 100. As can be seen from FIG 3A, a part of the periphery 9p of the laser beam 9 falls at and beyond an edge of the optical surface 54, and may therefore undesirably deposit energy into the edge or into structures or components (not shown) adjoining the optical element 52, such as a lens holder, which may consequently cause adverse effects such as heating of the optical element 52 and/or of the adjoining structures or components, such as of the lens holder. Thus, as shown in FIG 3B, conventionally a scan field S is defined which is a maximum recommended navigable area of the central axis 99x of the beam 9 so as to avoid the periphery 9p of the laser beam 9 to fall beyond the edge of the optical surface 54, and to avoid related adverse effects, such as heating, of the optical element and/or of the adjoining structures or components. Thus, a limited size of the scan field S is realized in conventional laser processing heads.

However, in the laser processing head 1 of the present technique as shown in FIG 3C, by using the diaphragm 100, the first portion 91 of the laser beam 9 having the greater intensity or power to cross-sectional area ratio is emitted out from the laser processing head 1 for laser processing whereas the second portion 92 having lower intensity or power to cross-sectional area ratio is obstructed by the diaphragm 100. In short, although the beam diameter or the cross-sectional area of the laser beam 9 provided onto the workpiece via the optical element 52 is lesser in FIG 3C compared to that in FIGs 3A and 3B, the intensity is still sufficient for laser processing. Since the beam diameter is reduced, the size or area of the scan field S of the beam 9 may be increased. Simply put, the central axis 99x of the beam 9 can be positioned by the scanning module 46 to be closer to the edges of the optical surface 54 without the periphery 9p of the laser beam 9 extending beyond the edge of the optical surface 54.

As shown in FIG 2A, the at least one diaphragm 100 may be configured, i.e. dimensioned or positioned and/or oriented, for example with respect to the focusing module 50 or the collimating module 44 or the scanning module 46, such that an entire cross-sectional area 91c of the laser beam 9, or the periphery 91p of the entire cross-sectional area 91c of the laser beam 9 having passed through the opening 102 of the diaphragm 100, i.e. of the first portion 91 of the laser beam 9, is incident on or transmitted through the optical surface 54 of the optical element 52.

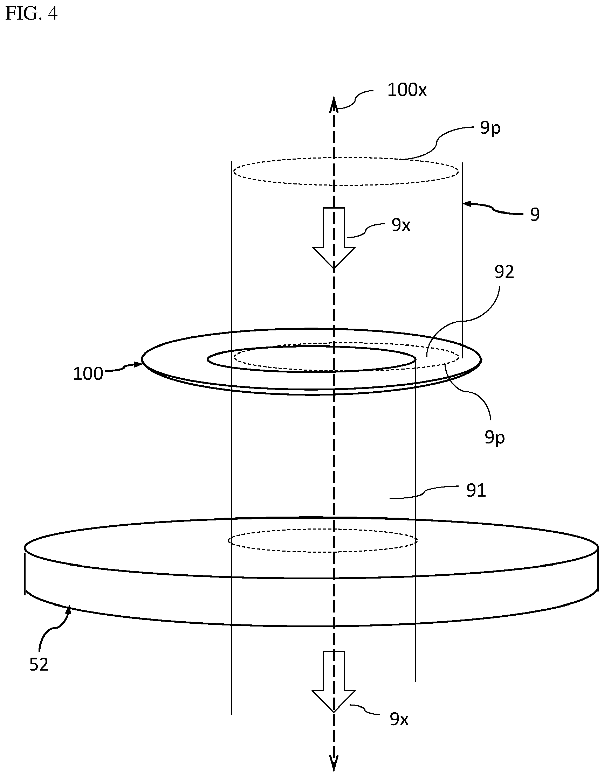

As shown in FIG 2A, the diaphragm 100 may be configured, i.e. dimensioned or positioned and/or oriented, such that the entire edge or periphery 9p of the laser beam 9 is obstructed by the diaphragm body 104. Alternatively, as shown in FIG 4, the diaphragm 100 may be configured, i.e. dimensioned or positioned and/or oriented, such that only a part of the entire edge or the periphery 9p of the laser beam 9 is obstructed by the diaphragm body 104.

It may be noted that the opening 102 of the diaphragm 100 may be smaller than an aperture of the optical element 52 such as than an aperture of the F-theta lens. However, the function of the diaphragm 100 as explained with reference to FIG 2B may also be achieved by a diaphragm 100 in which the opening 102 may not be smaller than the aperture of the optical element 52, by positioning the diaphragm 100 in such a way that at least a part of the laser beam 9 is obstructed by the diaphragm body 104.

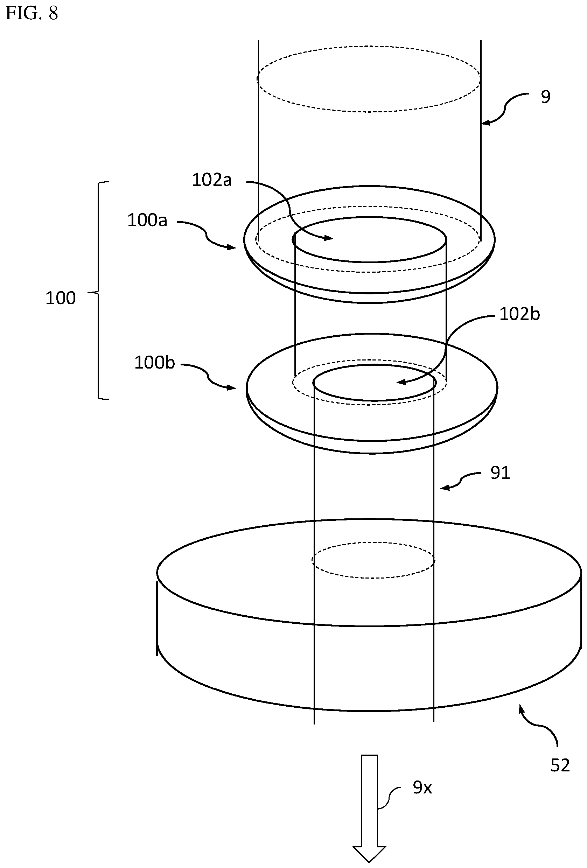

It may further be noted that although the diaphragm 100 is depicted as one diaphragm 100 at one position, the at least one diaphragm 100 may include a plurality of diaphragms 100a, 100b as shown in FIG 8, which may successively limit the cross-sectional area 9c of the laser beam 9 as shown in FIG 8. The plurality of diaphragms 100a, 100b may include an upstream diaphragm 100a and a downstream diaphragm 100b, with respect to the optical element 52 and the direction 9x. An opening 102a of the upstream diaphragm 100a may be smaller than an opening 102b of the downstream diaphragm 100b. The plurality of diaphragms 100a, 100b may be moveable with respect to each other and/or relative to the optical element 52, in a direction parallel to or along the optical axis 100x of the diaphragm 100 and/or parallel to or along the optical axis 52x of the optical element 52 and/or in a plane perpendicular to the optical axis 100x of the diaphragm 100 and/or perpendicular to the optical axis 52x of the optical element 52 - to variably or adjustably limit the cross-sectional area 9c of the laser beam 9 passing therethrough.

One or more of each of the first, the second and the third diaphragms 10, 20, 30 may include the upstream and the downstream diaphragms 100a, 100b, as explained hereinabove.

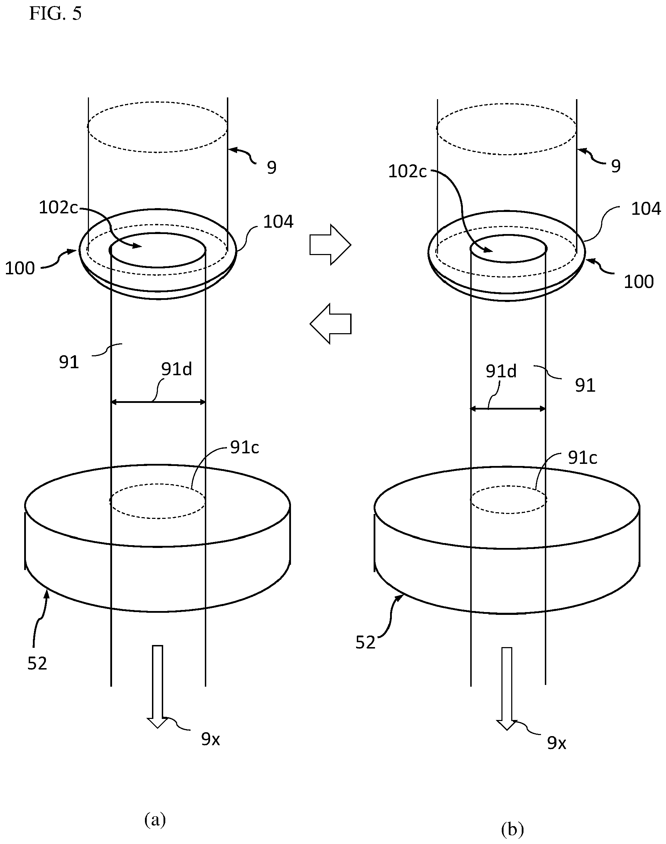

The at least one diaphragm 100 may be configured to adjustably or variably limit the cross-sectional area of the laser beam 9, i.e. to vary the cross-sectional area 91c of the first portion 91 of the laser beam 9, passing therethrough. FIG 5 schematically depicts an exemplary embodiment wherein the at least one diaphragm 100 adjusts or varies the cross-sectional area 102c of the opening 102 of the diaphragm 100 and consequently the cross-sectional area 91c of the laser beam 9 passing therethrough is varied or adjusted. The diaphragm body 104 may be formed as a mechanical iris or mechanical shutter which may move in a radially to-and-fro direction to vary the cross-sectional area 102c or radius or diameter of the opening 102. Thus, the cross-sectional area 91c or the diameter 91d of the first portion 91 of the laser beam 9, passing therethrough may be varied. In other words, a proportion of the first portion 91 of the laser beam 9 and the second portion 92 of the laser beam 9 may be varied by radially increasing or decreasing the opening 102 of the diaphragm 100. More specifically, a proportion of the cross-sectional area 91c of the first portion 91 of the laser beam 9 and the cross-sectional area 92c of second portion 92 of the laser beam 9 may be varied by radially increasing or decreasing the opening 102 of the diaphragm 100. The diaphragm body 104 may be moved to radially increase or decrease the opening 102 of the diaphragm 100 by using an actuator such as a motor (not shown).

FIG 6 schematically depicts an exemplary embodiment wherein the at least one diaphragm 100 is moveable parallel to or along an optical axis 100x of the diaphragm 100 to adjustably limit the cross-sectional area 91c of the laser beam 9 passing therethrough. As can be seen from FIG 6, a distance D1, D2 between the diaphragm 100 and the optical surface 54 may be increased or decreased, for example be the diaphragm aligning mechanism (not shown), prevision mentioned. Thus, as shown in FIG 6 the at least one diaphragm 100 may be configured to adjustably or variably limit the cross-sectional area of the laser beam 9, i.e. to vary the cross-sectional area 91c of the first portion 91 of the laser beam 9, passing therethrough. The diaphragm body 104 may move in an axially to-and-fro direction to vary the cross-sectional area 91c of the first portion 91 of the laser beam 9. Thus, the cross-sectional area 91c or the diameter 91d of the first portion 91 of the laser beam 9, passing therethrough may be varied. In other words, a proportion of the first portion 91 of the laser beam 9 and the second portion 92 of the laser beam 9 may be varied by axially increasing or decreasing the distance D1, D2 of the diaphragm 100 from the optical surface 54 or the optical element 52 or the focusing module 50 or the scanning module 46 or the collimating module 44. More specifically, a proportion of the cross-sectional area 91c of the first portion 91 of the laser beam 9 and the cross-sectional area 92c of second portion 92 of the laser beam 9 may be varied by axially increasing or decreasing the distance D1, D2 of the diaphragm 100 from the optical surface 54. The diaphragm body 104 may be moved axially using the diaphragm aligning mechanism which may use an actuator such as a motor (not shown).

FIG 7 schematically depicts an exemplary embodiment wherein the at least one diaphragm 100 is moveable in a plane perpendicular to the optical axis 100x of the diaphragm 100 - as can be seen from distance between the optical axis 100x of the diaphragm 100 and the optical axis 52x of the optical element 52 by a comparison of (a) and (b) depictions in FIG 7 - to adjustably limit the cross-sectional area 91c of the laser beam 9 passing therethrough. As can be seen from FIG 7, a lateral or horizontal distance or radial distance between the optical axis 100x of the diaphragm 100 and the optical axis 52x the optical surface 54 may be increased or decreased, for example be the diaphragm aligning mechanism (not shown).

It may be noted that the diaphragm aligning mechanism may be configured to simultaneously move the diaphragm 100 along or parallel to the optical axis 100x of the diaphragm 100 and/or along or parallel to the optical axis 52x of the optical element 52 and/or in a plane perpendicular to the optical axis 100x of the diaphragm 100 and/or in a plane perpendicular to the optical axis 52x of the optical element 52 - to variably or adjustably limit the cross-sectional area of the laser beam 9 passing therethrough.

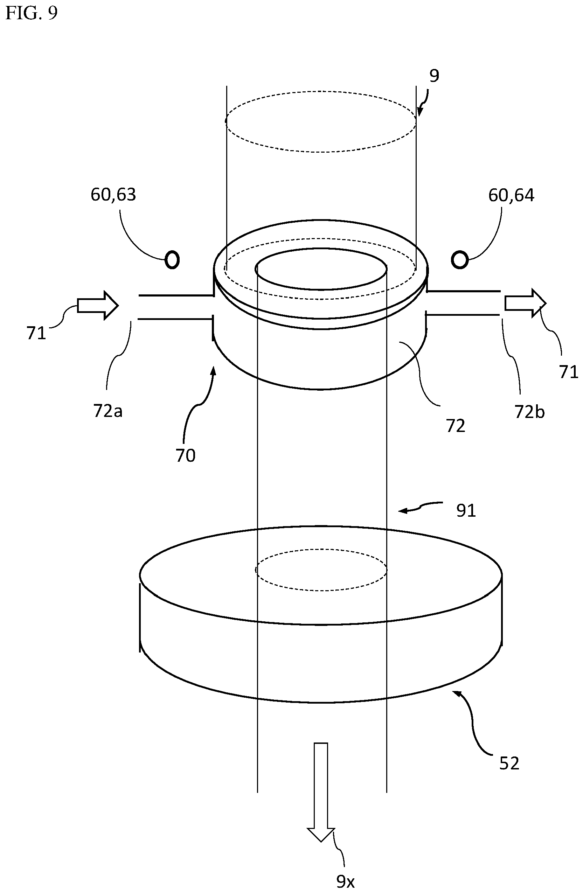

Hereinafter, with reference to FIGs 9 - 12 various exemplary embodiments of the diaphragm 100 are explained.

FIG 9 schematically depicts an exemplary embodiment of the at least one diaphragm having a coolant-based cooling mechanism 70. Preferably, the diaphragm having a cooling mechanism may be stationary, i.e. not movable. In this case, the cooling mechanism can be designed rather simple as when compared to cooling mechanisms for moving elements. The coolant-based cooling mechanism 70 includes a coolant 71 that flows through a cooling channel or coolant flow channel 72 or coolant flow path 72. The coolant flow channel 72 may be in surface contact with at least a part of a surface of the diaphragm body 104. Preferably, the coolant flow channel 72 is disposed at a surface of the diaphragm body 104 facing optically downstream direction, in other words at a surface opposite to the surface at which the laser beam 9 is obstructed. The coolant 71 enters the coolant flow channel 72 via an inlet 72a of the coolant flow channel 72, flows through the coolant flow channel 72 and performs heat exchange or cooling of the diaphragm body 104 while flowing through the coolant flow channel 72, and exits the coolant flow channel 72 via an outlet 72b of the coolant flow channel 72. The coolant 71 may be water. The coolant-based cooling mechanism 70 removes heat from the diaphragm body 104, which the diaphragm body 104 may have acquired for example from the second portion 92 of the laser beam 90 obstructed by the diaphragm body 104.

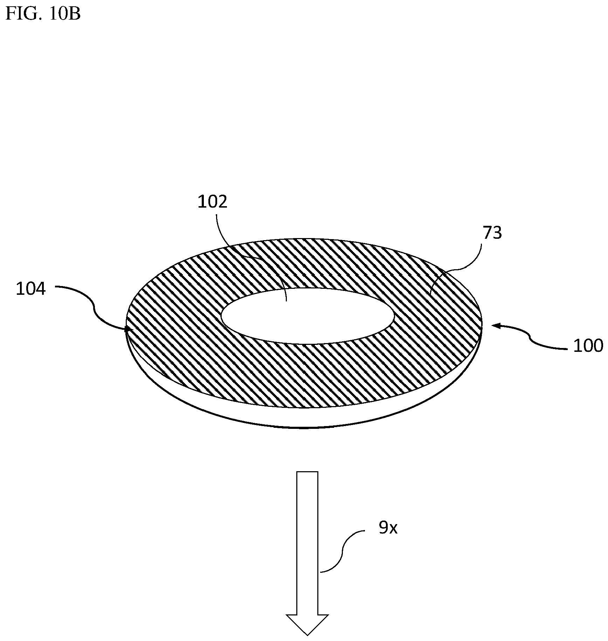

FIG 10B schematically depicts an exemplary embodiment of the at least one diaphragm 100 having a surface coating 73. The surface coating 73 may be applied to at least one surface of the diaphragm body 104. Preferably, the surface coating 73 may be disposed at a surface of the diaphragm body 104 facing optically upstream direction, in other words to the surface at which the laser beam 9 is obstructed or incident. The surface coating 73 functions to absorb the incident laser beam 9, i.e. the second portion 92 of the laser beam 9, and thus obviates undesired reflection or scattering of the laser power after impacting the diaphragm body 104.

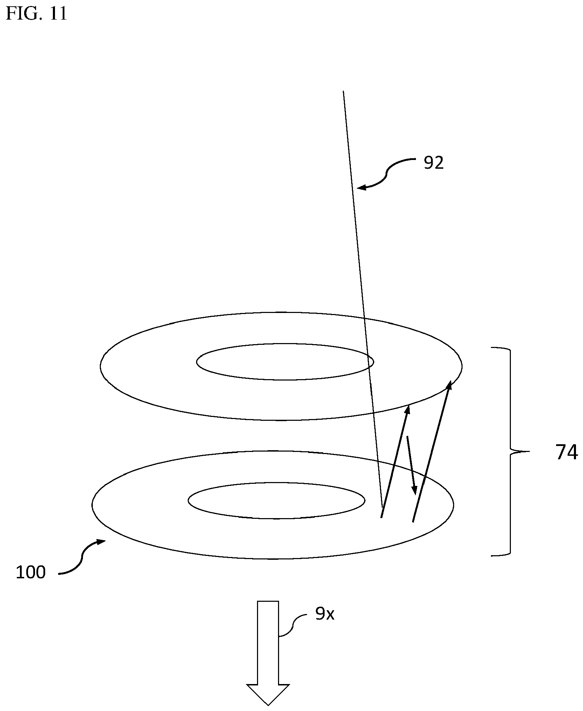

FIG 11 schematically depicts an exemplary embodiment of the at least one diaphragm 100 having a beam trap 74. The beam trap 74 may be formed within the diaphragm body 104. Preferably, the beam trap 74 may be disposed at a surface of the diaphragm body 104 facing optically upstream direction, in other words at the surface at which the laser beam 9 is obstructed. The beam trap 74 functions to absorb the incident laser beam 9 by subjecting the incident laser beam 9, i.e. at least a part of the second portion 92 of the laser beam 9, to repeated total internal reflections, and thus obviates undesired reflection or scattering of the laser power after impacting the diaphragm body 104. It may be noted that depiction of FIG 11 shows an exploded view of the diaphragm 100 for ease of understanding of the total internal reflections.

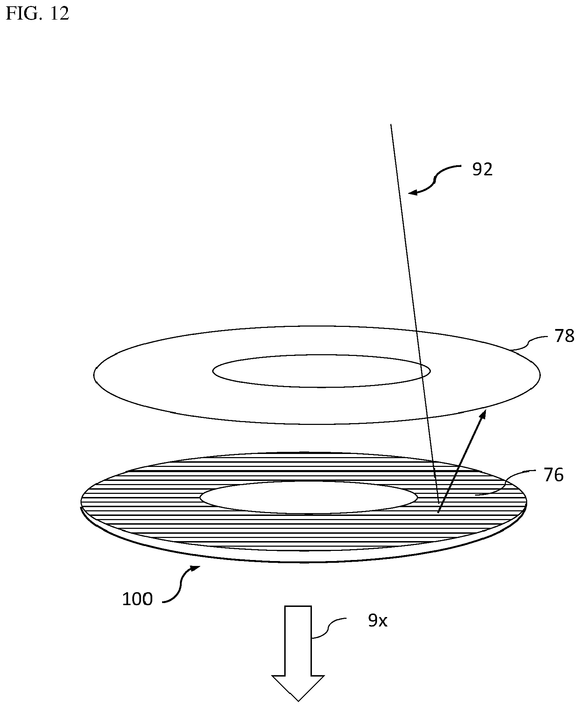

FIG 12 schematically depicts an exemplary embodiment of the at least one diaphragm 100 having a reflector 76 and an absorbing unit 78. The reflector 76, which may be a mirror, may be formed on or at a surface of the diaphragm body 104, for example in form of a reflective coating. Thus, the reflector 76 may have a shape of a circular mirror with a hole in the center. Preferably, the reflector 76 may be disposed at a surface of the diaphragm body 104 facing optically upstream direction, in other words to the surface at which the laser beam 9 is obstructed or incident. The reflector 76 functions to reflect the incident laser beam 9, i.e. at least a part of the second portion 92 of the laser beam 9, towards the absorbing unit 78. The absorbing unit 78 may be disposed to receive the reflected part of the laser beam 9 and functions to absorb the incident laser beam 9 and thus obviates undesired reflection or scattering of the laser power after impacting the diaphragm body 104. The absorbing unit 78 may be actively cooled for example by using a coolant-based cooling mechanism, similar to the above-described coolant-based cooling mechanism 70. Thus, the position at which the laser power is absorbed can be distant from the obstructing surface, i.e. from the reflector.

As shown in FIG 1, the laser processing head 1 may include a sensor module 60 comprising one or more sensors 62 configured to sense a laser power of a portion, e.g. the first portion 91, of the laser beam 9 having passed through the opening 102 of the diaphragm 100 and/or to sense a laser power absorbed by the diaphragm body 104. The laser sensor module 60 may comprise one or more sensors 61 configured to sense a laser power of the laser beam 9 upstream of the diaphragm 100. The sensor 62 configured to sense the laser power of the portion of the laser beam 9, i.e. the first portion 91, passed through the opening 102 of the diaphragm 100, may be positioned or located at the nozzle 58, particularly at the opening of the nozzle 58 of the laser processing head 1, and more particularly outside or downstream of the opening of the nozzle 58 of the laser processing head 1.

As previously mentioned with reference to FIG 9, the diaphragm body 104 may have the coolant-based cooling mechanism 70. The sensor module 60 may include a temperature sensor 63, e.g. a first temperature sensor 63, disposed at the inlet 72a of the coolant flow channel 72 to measure or determine a temperature of the coolant 71 entering the coolant flow channel 72. The sensor module 60 may include a temperature sensor 64, e.g. a second temperature sensor 64, disposed at the outlet 72b of the coolant flow channel 72 to measure or determine a temperature of the coolant 71 exiting the coolant flow channel 72.

One or more of the sensors 61, 62 of the sensor module 60 may communicate with a processor 48 of the laser processing head 1 or the system 2.

One or more of the sensors 63, 64 of the sensor module 60 may communicate with the processor 48 of the laser processing head 1. From a difference in sensed temperatures by the temperature sensors 63, 64, the processor 48 may determine a laser power of a portion, e.g. the first portion 91, of the laser beam 9 passed through the opening 102 of the diaphragm 100 and/or to sense a laser power absorbed by the diaphragm body 104.

The processor 48 may be configured to control the laser source module 42 to adjust a laser power of the laser beam 9 generated by the laser source module 42 according to a sensed or determined laser power of a portion, i.e. the first portion 91, of the laser beam 9 passed through the opening 102 of the diaphragm 100 and/or according to a sensed laser power absorbed by the diaphragm body 104.

The processor 48 may be configured to control the diaphragm 100 to adjust or vary the cross-sectional area 91c of the laser beam 9 passing through the diaphragm 100, for example according to a sensed or determined laser power of a portion, i.e. the first portion 91, of the laser beam 9 having passed through the opening 102 of the diaphragm 100 and/or according to a sensed laser power absorbed by the diaphragm body 104 and/or according to a scan position of the laser beam deflected by the scanning module.

The processor 48 may control the diaphragm body 104 or a corresponding actuator to vary or adjust the cross-sectional area 102c of the opening 102 of the at least one diaphragm 100 to variably or adjustably limit the cross-sectional area 91c of the laser beam 9 passing therethrough - as explained with reference to FIG 5.

The processor 48 may control the diaphragm body 104 or the corresponding aligning mechanism or actuator to move the diaphragm 100 along or parallel to the optical axis 100x of the diaphragm 100 and/or along or parallel to the optical axis 52x of the optical element 52 and/or in a plane perpendicular to the optical axis 100x of the diaphragm 100 and/or in a plane perpendicular to the optical axis 52x of the optical element 52, e.g. according to a scan position of the laser beam deflected by the scanning module, to variably or adjustably limit the cross-sectional area of the laser beam passing therethrough - as explained with reference to FIGs 6 and 7.

In a third aspect of the present technique, a method for increasing a scan field S of the laser beam 9 is presented. The method may be for the laser processing head 1 or for the laser processing system 2 as explained hereinabove with reference to FIG 1 to 12. In the method, a laser beam 9 is introduced at the laser entry module 40, then the laser beam 9 is collimated by the collimating module 44, then the laser beam 9 is deflected by the scanning module 46, and then the laser beam 9 is focused, for example on a workpiece W, by the focusing module 50. In the method, the cross-sectional area 9c of the laser beam 9 is limited by the diaphragm body 104 by passing the laser beam 9 through the diaphragm 100 as explained hereinabove with reference to FIG 1 to 12.

In the present technique, when a multi-mode laser is used, by inserted the diaphragm 100 between the collimating module 44 and the laser entry module 40, some or all higher transverse modes may be cut off by the diaphragm body 104. The remaining laser beam can be focused to a smaller focus diameter, since the beam parameter product remains constant. The inserted diaphragm 100 may act like an optical fiber with a smaller fiber diameter.

Thus, it is possible to adjust the beam quality of the laser by inserting or moving an diaphragm 100 along the optical axis between the collimating module and the laser entry module. Thus, a single laser processing head or system can be used to perform both joining tasks that require high laser power but are less demanding in terms of the lateral extension of the joint, and tasks that require a very small focus diameter in order to perform the most precise processing possible. Switching or changing the beam quality and thus the focus size can be done during processing. Also, laser beam sources with a relatively low spatial beam quality, such as diode lasers or multi-mode fiber lasers, may be used with a small and compact scanning module, while maintaining a good processing quality.

In the present technique, the diaphragm 100 may also be understood as an aperture or stop.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope of the appended claims. The scope of the invention is, therefore, indicated by the following claims rather than by the foregoing description.

**List of reference signs**

| | | | |
|---|---|---|---|
| 1 | laser processing head | 70 | coolant-based cooling mechanism |
| 2 | laser processing system | 71 | coolant |
| 9 | laser beam | 72 | flow path of coolant |
| 9d | diameter of the laser beam | 72a | inlet of flow path of coolant |
| 9c | cross-sectional area of the laser beam | 72b | outlet of flow path of coolant |
| 9p | periphery of the laser beam | 73 | surface coating |
| 9x | direction of travel of the laser beam | 74 | beam trap |
| 10 | first diaphragm | 76 | reflector |
| 12 | opening of the first diaphragm | 78 | absorbing unit |
| 14 | body of the first diaphragm | 91 | first part/portion of the laser beam |
| 20 | second diaphragm | 91d | diameter of the first portion |
| 22 | opening of the second diaphragm | 91c | cross-sectional area of first part |
| 24 | body of the second diaphragm | 91p | periphery of the first portion |
| 30 | third diaphragm | 92 | second part/portion of the laser beam |
| 32 | opening of the third diaphragm | 92c | cross-sectional area of second part |
| 34 | body of the third diaphragm | 99x | central axis of the laser beam |
| 40 | laser entry module | 100 | diaphragm |
| 42 | laser source module | 100a | upstream diaphragm |
| 44 | collimating module | 100b | downstream diaphragm |
| 46 | scanning module | 100x | optical axis of the diaphragm |
| 48 | processor | 102 | opening |
| 50 | focusing module | 102a | opening of upstream diaphragm |
| 52 | optical element | 102b | opening of downstream diaphragm |
| 52x | axis of the optical element | 102c | cross-sectional area of the opening |
| 54 | optical surface of the optical element | 104 | diaphragm body |
| 54p | periphery of the optical surface | S | scan field of the laser beam |
| 58 | nozzle | D1, D2 | distances |
| 60 | sensor module | | |
| 61, 62 | sensors | | |
| 63, 64 | temperature sensors | | |

## Claims

1. A laser processing head (1) comprising:
- a laser entry module (40) for introducing a laser beam (9);
- a collimating module (44) configured to collimate the laser beam (9);
- a scanning module (46) configured to deflect the laser beam (9); and
- a focusing module (50) configured to focus the laser beam (9);
**characterized by**
- at least one diaphragm (100) for increasing a scan field (S) of the laser beam (9);
wherein the diaphragm (100) comprises a diaphragm body (104) and an opening (102), and is configured to limit a cross-sectional area (9c) of the laser beam (9) by the diaphragm body (104); and
wherein the at least one diaphragm (100) is positioned between the laser entry module (40) and the focusing module (50).

2. The laser processing head (1) according to claim 1, wherein the at least one diaphragm (100) is positioned such that an entire cross-sectional area (91c) of the laser beam (91) having passed through the opening (102) of the diaphragm (100) is incident on an optical surface (54) of an optical element (52), wherein the optical element (52) is comprised in at least one of the collimating module (44), the scanning module (46) and the focusing module (50).

3. The laser processing head (1) according to claim 1 or 2, wherein the diaphragm body (104) is arranged to obstruct an entire edge (9p) of the laser beam (9) or to obstruct only a part of an entire edge (9p) of the laser beam (9).

4. The laser processing head (1) according to any one of claims 1 to 3, wherein the opening (102) of the diaphragm (100) is smaller than an aperture of the focusing module (50).

5. The laser processing head (1) according to any one of claims 1 to 4, wherein the at least one diaphragm (100) includes at least one of:
- a first diaphragm (10) positioned between the laser entry module (40) and the collimating module (44), and configured to limit the cross-sectional area (9c) of the laser beam (9) propagating from the laser entry module (40) to the collimating module (44);
- a second diaphragm (20) positioned between the collimating module (44) and the scanning module (46), and configured to limit the cross-sectional area (9c) of the laser beam (9) propagating from the collimating module (44) to the scanning module (46); and
- a third diaphragm (30) positioned between the scanning module (46) and the focusing module (50), and configured to limit the cross-sectional area (9c) of the laser beam (9) propagating from the scanning module (46) to the focusing module (50).

6. The laser processing head (1) according to any one of claims 1 to 5, wherein the at least one diaphragm (100) is configured such that the laser beam (91) passing through the diaphragm (100) has a width less than 95% of awidth of the laser beam (9) received at the diaphragm (100).

7. The laser processing head (1) according to any one of claims 1 to 6, wherein the at least one diaphragm (100) is configured to adjustably limit a cross-sectional area (9c) of the laser beam (91) passing therethrough.

8. The laser processing head (1) according to claim 7, wherein the at least one diaphragm (100) is configured to adjust a cross-sectional area (102c) of the opening (102) to adjustably limit the cross-sectional area (91c) of the laser beam (91) passing therethrough.

9. The laser processing head (1) according to claim 7 or 8, wherein the at least one diaphragm (100) is configured to move along an optical axis (100x) of the diaphragm (100) and/or in a plane perpendicular to the optical axis (100x) of the diaphragm (100) to adjustably limit the cross-sectional area (91c) of the laser beam (91) passing therethrough.

10. The laser processing head (1) according to any of claims 1 to 9,
wherein the diaphragm body (104) comprises a coolant-based cooling mechanism (70) to remove heat from the diaphragm body (104); and/or
wherein the diaphragm body (104) comprises a surface coating (73) configured to increase absorption of a portion of the laser beam (92) hitting the diaphragm body (104); and/or
wherein the diaphragm body (104) comprises a beam trap (74) configured to trap, by repeated total internal reflections, a portion of the laser beam (92) hitting the diaphragm body (104); and/or
wherein the diaphragm body (104) comprises a reflector (76) and an absorbing unit (78), and the reflector (76) is arranged to reflect a portion of the laser beam (92) hitting the diaphragm body (104) towards the absorbing unit (78) for absorbing the reflected portion of the laser beam (92).

11. The laser processing head (1) according to any one of claims 1 to 10, further comprising a sensor module (60) comprising one or more sensors (61, 62, 63, 64) configured to sense a laser power of a portion of the laser beam (91) having passed through the opening (102) of the diaphragm (100) and/or to sense a laser power absorbed by the diaphragm body (104).

12. A laser processing system (2) comprising a laser processing head (1) according to any one of the preceding claims, and a laser source module (42) configured to generate the laser beam (9).

13. The laser processing system (2) according to claim 12, wherein the laser source module (42) comprises a single-mode laser source or a multi-mode laser source or is configured to generate a laser beam (9) having a power of at least 200 W.

14. The laser processing system (2) according to claim 12 or 13, further comprising a processor (48) configured:
- to control the laser source module (42) to adjust a laser power of the laser beam (9) according to a sensed laser power of a portion of the laser beam (91) passed through the opening (102) of the diaphragm (100) and/or according to a sensed laser power absorbed by the diaphragm body (104) and/or according to a scan position of the laser beam deflected by the scanning module; and/or
- to control the diaphragm (100) to adjust the cross-sectional area (91c) of the laser beam (91) passing through the diaphragm (100) according to a scan position of the laser beam deflected by the scanning module.

15. A method for controlling a laser processing head, the method comprising:
- introducing a laser beam (9) at a laser entry module (40) of the laser processing head (1);
- collimating the laser beam (9) by a collimating module (44) of the laser processing head (1);
- deflecting the laser beam (9) by a scanning module (46) of the laser processing head (1); and
- focusing the laser beam (9) by a focusing module (50) of the laser processing head (1);
**characterized in that** the method comprises:
- passing the laser beam (9) through a diaphragm (100) of the laser processing head (1) such that a scan field (S) of the laser beam (9) is increased by limiting a cross-sectional area (9c) of the laser beam (9) by the diaphragm (100).

## Amended claims

### Amended claims in accordance with Rule 137(2) EPC.

1. A laser processing head (1) comprising:
- a laser entry module (40) for introducing a laser beam (9);
- a collimating module (44) configured to collimate the laser beam (9);
- a scanning module (46) configured to deflect the laser beam (9); and
- a focusing module (50) configured to focus the laser beam (9);
- at least one diaphragm (100), wherein the diaphragm (100) comprises a diaphragm body (104) and an opening (102), and is configured to limit a cross-sectional area (9c) of the laser beam (9) by the diaphragm body (104), and wherein the at least one diaphragm (100) is configured to adjustably limit a cross-sectional area (9c) of the laser beam (91) passing therethrough;
**characterized in that**:
the at least one diaphragm (100) is configured to increase a scan field (S) of the laser beam (9);
wherein the at least one diaphragm (100) is positioned between the laser entry module (40) and the focusing module (50); and
wherein the at least one diaphragm (100) is configured to move along an optical axis (100x) of the diaphragm (100) to adjustably limit the cross-sectional area (91c) of the laser beam (91) passing therethrough.

2. The laser processing head (1) according to claim 1, wherein the at least one diaphragm (100) is positioned such that an entire cross-sectional area (91c) of the laser beam (91) having passed through the opening (102) of the diaphragm (100) is incident on an optical surface (54) of an optical element (52), wherein the optical element (52) is comprised in at least one of the collimating module (44), the scanning module (46) and the focusing module (50).

3. The laser processing head (1) according to claim 1 or 2, wherein the diaphragm body (104) is arranged to obstruct an entire edge (9p) of the laser beam (9) or to obstruct only a part of an entire edge (9p) of the laser beam (9).

4. The laser processing head (1) according to any one of claims 1 to 3, wherein the opening (102) of the diaphragm (100) is smaller than an aperture of the focusing module (50).

5. The laser processing head (1) according to any one of claims 1 to 4, wherein the at least one diaphragm (100) includes at least one of:
- a first diaphragm (10) positioned between the laser entry module (40) and the collimating module (44), and configured to limit the cross-sectional area (9c) of the laser beam (9) propagating from the laser entry module (40) to the collimating module (44);
- a second diaphragm (20) positioned between the collimating module (44) and the scanning module (46), and configured to limit the cross-sectional area (9c) of the laser beam (9) propagating from the collimating module (44) to the scanning module (46); and
- a third diaphragm (30) positioned between the scanning module (46) and the focusing module (50), and configured to limit the cross-sectional area (9c) of the laser beam (9) propagating from the scanning module (46) to the focusing module (50).

6. The laser processing head (1) according to any one of claims 1 to 5, wherein the at least one diaphragm (100) is configured such that the laser beam (91) passing through the diaphragm (100) has a width less than 95% of a width of the laser beam (9) received at the diaphragm (100).

7. The laser processing head (1) according to any one of claims 1 to 6, wherein the at least one diaphragm (100) is configured to adjust a cross-sectional area (102c) of the opening (102) to adjustably limit the cross-sectional area (91c) of the laser beam (91) passing therethrough.

8. The laser processing head (1) according to any one of claims 1 to 7, wherein the at least one diaphragm (100) is configured to move in a plane perpendicular to the optical axis (100x) of the diaphragm (100) to adjustably limit the cross-sectional area (91c) of the laser beam (91) passing therethrough.

9. The laser processing head (1) according to any of claims 1 to 8,
wherein the diaphragm body (104) comprises a coolant-based cooling mechanism (70) to remove heat from the diaphragm body (104); and/or
wherein the diaphragm body (104) comprises a surface coating (73) configured to increase absorption of a portion of the laser beam (92) hitting the diaphragm body (104); and/or
wherein the diaphragm body (104) comprises a beam trap (74) configured to trap, by repeated total internal reflections, a portion of the laser beam (92) hitting the diaphragm body (104); and/or
wherein the diaphragm body (104) comprises a reflector (76) and an absorbing unit (78), and the reflector (76) is arranged to reflect a portion of the laser beam (92) hitting the diaphragm body (104) towards the absorbing unit (78) for absorbing the reflected portion of the laser beam (92).

10. The laser processing head (1) according to any one of claims 1 to 9, further comprising a sensor module (60) comprising one or more sensors (61, 62, 63, 64) configured to sense a laser power of a portion of the laser beam (91) having passed through the opening (102) of the diaphragm (100) and/or to sense a laser power absorbed by the diaphragm body (104).

11. A laser processing system (2) comprising a laser processing head (1) according to any one of the preceding claims, and a laser source module (42) configured to generate the laser beam (9).

12. The laser processing system (2) according to claim 11, wherein the laser source module (42) comprises a single-mode laser source or a multi-mode laser source or is configured to generate a laser beam (9) having a power of at least 200 W.

13. The laser processing system (2) according to claim 11 or 12, further comprising a processor (48) configured:
- to control the laser source module (42) to adjust a laser power of the laser beam (9) according to a sensed laser power of a portion of the laser beam (91) passed through the opening (102) of the diaphragm (100) and/or according to a sensed laser power absorbed by the diaphragm body (104) and/or according to a scan position of the laser beam deflected by the scanning module; and/or
- to control the diaphragm (100) to adjust the cross-sectional area (91c) of the laser beam (91) passing through the diaphragm (100) according to a scan position of the laser beam deflected by the scanning module.

14. A method for controlling a laser processing head, the method comprising:
- introducing a laser beam (9) at a laser entry module (40) of the laser processing head (1);
- collimating the laser beam (9) by a collimating module (44) of the laser processing head (1);
- deflecting the laser beam (9) by a scanning module (46) of the laser processing head (1); and
- focusing the laser beam (9) by a focusing module (50) of the laser processing head (1);
**characterized in that** the method comprises:
- passing the laser beam (9) through a diaphragm (100), positioned between the laser entry module (40) and the focusing module (50), of the laser processing head (1) such that a scan field (S) of the laser beam (9) is increased by limiting a cross-sectional area (9c) of the laser beam (9) by the diaphragm (100); and
wherein the at least one diaphragm (100) is moved along an optical axis (100x) of the diaphragm (100) to adjustably limit the cross-sectional area (91c) of the laser beam (91) passing therethrough.
